(19) **Europäisches Patentamt**
**European Patent Office**
**Office européen des brevets**

(11) **EP 2 381 737 B1**

(12) **EUROPEAN PATENT SPECIFICATION**

(45) Date of publication and mention
of the grant of the patent:
**21.01.2015 Bulletin 2015/04**

(51) Int Cl.:
***H04W 84/18*** (2009.01)

(21) Application number: **09832920.4**

(86) International application number:
**PCT/CN2009/075501**

(22) Date of filing: **11.12.2009**

(87) International publication number:
**WO 2010/069238 (24.06.2010 Gazette 2010/25)**

(54) **COMMUNICATION METHOD FOR MESH AND STAR TOPOLOGY STRUCTURE WIRELESS SENSOR NETWORK**

KOMMUNIKATIONSVERFAHREN FÜR FUNKSENSORNETZWERK MIT MASCHEN- UND STERNTOPOLOGIE

PROCÉDÉ DE COMMUNICATION DESTINÉ À UN RÉSEAU DE CAPTEURS SANS FIL À STRUCTURE DE TOPOLOGIE MAILLÉE ET EN ÉTOILE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **19.12.2008 CN 200810229994**
**19.12.2008 CN 200810229991**

(43) Date of publication of application:
**26.10.2011 Bulletin 2011/43**

(73) Proprietor: **Shenyang Institute of Automation of the Chinese**
**Academy of Sciences**
**Liaoning 110016 (CN)**

(72) Inventors:
 • **LIANG, Wei**
  **Shenyang**
  **Liaoning 110016 (CN)**
 • **YU, Haibin**
  **Shenyang**
  **Liaoning 110016 (CN)**
 • **ZHANG, Xiaoling**
  **Shenyang**
  **Liaoning 110016 (CN)**

 • **YANG, Miao**
  **Shenyang**
  **Liaoning 110016 (CN)**
 • **XU, Weijie**
  **Shenyang**
  **Liaoning 110016 (CN)**
 • **WANG, Jun**
  **Shenyang**
  **Liaoning 110016 (CN)**
 • **ZENG, Peng**
  **Shenyang**
  **Liaoning 110016 (CN)**
 • **YANG, Zhijia**
  **Shenyang**
  **Liaoning 110016 (CN)**

(74) Representative: **Decamps, Alain René François**
**Office Kirkpatrick S.A.**
**Avenue Wolfers, 32**
**1310 La Hulpe (BE)**

(56) References cited:
**WO-A1-2006/049415        WO-A1-2006/049415**
**CN-A- 101 140 695        CN-A- 101 252 512**
**CN-A- 101 286 911        US-A1- 2007 019 604**
**US-A1- 2008 037 431**

**Description**

FIELD OF THE INVENTION

This invention relates to a wireless communication technology, in particular, it relates to a communication method for mesh and star topology structure wireless sensor networks, which are hybrid multiple access and adaptive frequency hopping networks.

BACKGROUND OF THE INVENTION

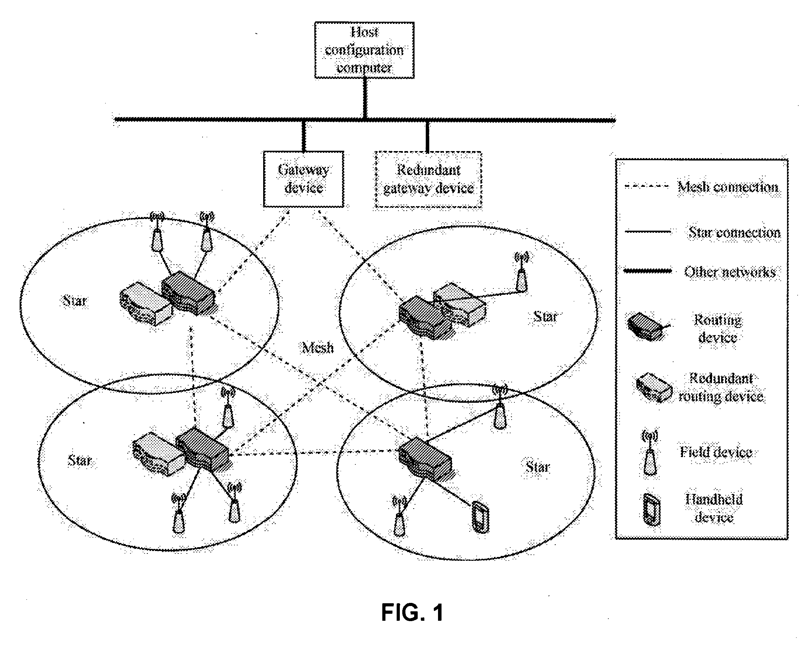

Several industries would benefit significantly from using wireless sensor networks (WSNs). In contrast with wired networks, wireless networks do not require wiring between nodes, and they are easy to maintain, highly flexible, and may be rapidly implemented, all of which features are advantageous in industrial applications. The wireless industry has developed as wireless communication technologies have matured and costs have decreased. In WO 2006/049415 disclosed is a radio communication system for ultra wideband (UWB) impulse communication that minimizes power consumption by eliminating a need for carrier detection and sharing transmission/reception time information in UWB impulse comomunications. In WO 2006/049415, the system includes a network coordinator and one or more devices communicating on a superframe basis in subordination to the network coordinator. A typical industrial wireless measurement and control network is illustrated in FIG. **1.** Nodes comprising wireless sensors or actuators are distributed at each observation point in an industry field. These nodes form networks, have a routing function, and send field monitoring data to gateway nodes via multi-hop routing. Aside from the convenience introduced by industrial wireless networks, the requirements for wireless networks imposed by industrial applications are strict and demand reliable, real-time operation with energy conservation to achieve high-quality communication. In terms of reliability, multi-frequency narrow band jamming, interference from coexisting networks, and multi-path effects are problematic for the use of scarce channel resources to achieve reliable communication. There is a need to identify solutions to the reliability problems associated with these effects. In terms of timeliness, industrial applications have more strict requirements than other applications because time is of the essence in industrial communications, and even a small delay can result in grave accidents. In terms of energy conservation, low energy consumption is a key to guaranteeing long-term operation, as well as to reducing costs, especially for nodes attached to power sources that are difficult to replace. Because the WSN technology is feasible for laboratory use, more and more people are recognizing the advantages of a carefully crafted communication topology, particularly the communication process used in mesh and star topology WSNs (MSTNs). MSTNs are typical of WSNs used in industrial applications. However, an MSTN that can simultaneously realize reliable, real-time, energy-saving communication has not been reported.

SUMMARY OF THE INVENTION

To address the existing defects in wireless sensor network (WSN) technologies that cannot simultaneously realize reliable, real-time, and energy saving communication, this invention seeks to solve technical problems by providing a method of communication that is reliable, real-time, and flexible, based on a mesh and star topology, which relies on a hybrid multiple access and adaptive frequency hopping (AFH) approach to communication.

To solve the above technical problems, the technical scheme used in this invention is described below.

A method of achieving WSN communication in a mesh and star topology network (MSTN), comprising the steps of:

Connecting many nodes in a WSN to form a mesh and star hybrid topology structure;

Based on the above topology structure, defining a superframe structure based on IEEE 802.15.4-2006;

Based on the above topology structure and superframe structure, defining methods for long-period data processing, connectivity assessment, media access control, channel measurement, frequency hopping, beacon frame formation, and two-stage resource allocation;

Based on the above topology structure, superframe structure, and methods, defining a method for network establishment; and

Based on the above network construction method, defining a communication method that used for MSTN communication.

The MSTN includes four types of physical nodes: gateway nodes, routing nodes, field nodes, and handheld nodes. Gateway nodes are the gathering centers of data and provide interfaces to which MSTNs may connect through the wired network, such as the Ethernet. Routing nodes support all types of sensors and are used to duplicate and retransmit data in an MSTN. Field nodes are set up in industry fields, are connected with sensors and actuators, are used for transmitting process measurements and control data to accomplish specific applications. Handheld nodes access networks temporarily and are used to configure and maintain MSTN nodes.

The gateway node includes two functional modules: a network manager and a security manager. The network and security managers achieve their functions separately. The network manager is used for managing node additions, forming a network, and monitoring the performance of the whole network. The security manager is used for the key functions of management and authentication of routing nodes and field nodes.

The structure of the mesh and star hybrid topology is as follows:

The first level comprises a mesh network, in which routing nodes and gateway nodes are deployed. A routing node communicates with at least one field node, gateway node, and one another routing node; and

The second level comprises a star network, in which routing nodes and field nodes are deployed, and which is also called a cluster. The field nodes communicate with only one routing node, but not with each other.

The superframe structure is based on the MAC layer of IEEE 802.15.4-2006. The specific structure includes a beacon frame period, a contention access period (CAP), a contention-free access period (CFP), an intra-cluster communication period, an inter-cluster communication period, and a sleeping period.

The beacon frame period is used for timeslot synchronization and superframe information publishing.

The CAP is used for node addition and intra-cluster management, and realizes medium access control by the timeslot carrier sense multiple access with collision avoidance (CSMA/CA) algorithm.

The CFP is used for emergency communications, that is, communications among handheld nodes and inter-cluster heads distributed by routing nodes, and uses a time division multiple access (TDMA) approach to communicate during CFP.

The intra-cluster communication period, which is used for intra-cluster communication, expands the CFP.

The inter-cluster communication period is used for inter-cluster communication and management.

Both intra-cluster communication and inter-cluster communication adopt the TDMA approach and timeslot frequency hopping for communication. Communication resources are written to nodes in the form of <channel, timeslot>.

A superframe is maintained by each node, and the length of the superframe in each period is defined by itself. The length of a superframe is $2^N$ times the basic length of a superframe (N is a positive integer). The basic length of a superframe is 32 timeslots. The length of a superframe of field nodes is decided by its data update rate. A superframe length in a routing node is the minimum superframe length of all field nodes in the star network, and the superframe length in a gateway node is decided by the minimum superframe length of its neighboring routing nodes.

Intra-cluster communication is communication between routing nodes and field nodes. Inter-cluster communication is communication among routing nodes or between routing nodes and gateway nodes.

The beacon frame period, CAP, and CFP use the same channel in a single superframe period. If a channel is lacking, communication among the different clusters adopts a time division strategy.

The beacon frame payload is used to publish the extended superframe information, which at least includes the following information: cluster ID, absolute timeslot number, and the next channel used in the next superframe cycle.

The beacon frames are sent in the following modes:

Gateway nodes and routing nodes send beacon frames but do not forward beacon frames;

Gateway nodes send beacon frames for time synchronization and joining of neighbor routing nodes and for broadcasting the superframe information of gateway nodes; and

Routing nodes send beacon frames for time synchronization, to facilitate joining of intra-cluster field nodes, and to broadcast the superframe information of the routing nodes.

Long cycle for data is defined as the data update rate of a device that is either greater than the maximum superframe length of IEEE STD 802.15.4-2006 or is greater than the data update rate of the routing device in a cluster.

The long-period data transmitted in the current superframe period are judged according to the following method.

$$TransmitFlag$$
$$= \left[ \frac{AbsoluteSlotNumber - ActiveSlot + 1}{NumberSlots} \right] \% \, SuperframeMultiple$$

If 0 < *TransmitFlag* < *SuperframeMultiple* and *TransmitFlag* = *LinkSuperframeNum,* then the field node transmits data in this superframe cycle.

If *TransmitFlag* = 0 and *LinkSuperframeNum* = *SuperframeMultiple,* then the field node transmits data in this superframe period.

Otherwise, the long-cycle data are not transmitted in the current superframe cycle.

The method of frequency hopping supports the following three frequency hopping mechanisms:

Adaptive frequency switching (AFS): in the MSTN superframe, the beacon period, CAP, and CFP use the same channel in the same superframe cycle, and the channel changes according to the channel conditions in different superframe cycles. When the channel conditions are bad, the nodes change the communication channel. The channel conditions are evaluated by the packet loss rate and retransmission times.

AFH: in the MSTN superframe, the timeslot of the intra-cluster communication stage changes the communication channel according to the channel conditions. When channel conditions are bad, the node changes the communication channel conditions. The channel conditions are evaluated according to the packet loss rate and the retransmission time. The intra-cluster communication period of an inactive period adopts the hopping mechanism. The structure of the frequency hopping sequence is: <timeslot 1, channel 1 ><timeslot 2, channel 2>... <timeslot i, channel i>.

Timeslot hopping (TH): to avoid interference and fading, the user changes the communication channel in each timeslot according to a frequency hopping sequence that is predefined by the user. The user adopts a frequency hopping mechanism for intra-cluster communication during the inactive period. The structure of the frequency hopping sequence is: <timeslot 1, channel 1 ><timeslot 2, channel 2>... <timeslot i, channel i>.

For AFS, the beacon frame of the last superframe period forecasts the channel that will be used in the next superframe period. For AFH, the last timeslot forecasts the channel that will be used in the next timeslot.

The channel measurement method is carried out as follows:

The channel measurement is used to offer the channel conditions to the network manager and the route node, thereby helping the network manager and route node to allocate a communication channel. A field node (or routing node) can measure one or more channel conditions and report statistical information to the route node (or network manager). The field node transmits the measurement result collected from field nodes to route nodes, and a route node transmits the channel conditions collected from itself and from the field nodes to the network manager.

During channel measurement, each node records the conditions of all channels used for communication with the node during the measurement period. The performance information that is recorded includes: the link quality indicator (LQI), the packet loss rate, and the retransmission times. The packet loss rate is determined by the number of acknowledgment frames (ACK) and the number of transmitted packets.

The method of two-stage resource allocation is as follows:

The network manager in the gateway node allocates resources for the routing nodes in a mesh network, the referred resources include resources used by the routing nodes for communication in mesh network and the resources that the routing nodes can allocate to the field nodes;

Then routing node allocates communication resources for the star network.

The following schedules are employed for allocating resources in the star network:

First allocating fixed channels;

First allocating timeslots to the nodes with the fastest update rate;

First allocating resources to the packet with the earliest generating time; and

First allocating resources to the highest priority packet prior to other packets.

Routing nodes and field nodes should save, respectively, the resources allocated by the network manager for the routing nodes and the resources allocate by the routing nodes for the field nodes. These resources involve superframes and link attributes. Link attributes include the information related to communication in each timeslot within the superframe attributes, which declare the communication parameters among adjacent nodes in the network. Each node should maintain its own link information.

Each superframe attribute includes Superframe ID, SuperframeMultiple, NumberSlots, ActiveFlag, and ActiveSlot. The link attributes includes LinkID, NeighborID, LinkType, RelativeSlotNumber, LinkSuperframeNum, ActiveFlag, ChannelIndex, and SuperframeID.

The routing nodes or field nodes make one or more connective assessments before joining the MSTN network according to the connectivity assessment method, and they choose one or more father nodes. The indices of connectivity evaluation includes: receiver signal strength indicator (RSSI), energy detection (ED), and LQI.

The network establishment method is as follows:

The joining request and joining response of field nodes or handheld nodes must be forwarded by the routing nodes already present in the network. If a routing node cannot reach the gateway node in one hop, it will also need other routing nodes to forward the joining request and joining response.

The content of the joining request includes the physical address and the node type. The content of the joining response include the joining state, the physical address of the new node, and the short address of the new node. The joining state is used to indicate the result of the node that is applying to join the network. The short address of the new node is a 16-bit address distributed by the gateway node after the node successfully joins.

The process by which a node joins a network is:

(1) Network discovery: the node waiting to join the network continuously scans the available channels in the network until it successfully receives a beacon from the joined routing nodes or gateway node;

(2) Time synchronization: the node waiting to join the network chooses the beacon-emitting node as the proxy routing node, and uses the time information in the beacon to complete time synchronization;

(3) Send a joining request: the node waiting to join the network sends a request to the proxy routing node, and the proxy routing node forwards this request to the gateway node;

(4) Return a joining response: after the gateway node receives the joining response and finishes security authentication, the joining response is returned;

(5) Processing the response: the node waiting to join the network receives a joining response forwarded by the proxy routing node. If the response is negative, the node waiting to join the network shall restart this joining process; otherwise, the joining process shall be finished; and

(6) Broadcast beacon: if the node waiting to join the network has joined the network successfully and is acting as a routing node, it shall broadcast beacons.

The gateway node allocates communication resources and routes to a node after the node joins the network. The processes of resource allocation to routing nodes, field nodes, and handheld nodes are different.

If a new routing node joins the network by one hop, the gateway node directly builds a superframe for it and allocates superframes, links, and routes to this routing node by using the command frames that operate on the superframes, links and routes. If the new routing node joins the network by multi-hops, the command frames that operate on the superframes, links, and routes should be forwarded by the existing routing nodes.

The process of allocating communication resources to the routing nodes is as follows: after a routing node joins the network, it reports a neighbor's information to the gateway node. The gateway node configures the routing table for the new routing node based on the reported neighbor's information. The gateway node configures the superframe table for the new routing node based on the reported neighbors' information. Finally, the gateway node configures the link table for the new routing node based on the reported neighbors' information.

During the process of allocating resources to newly joined field nodes, the communication resources are pre-allocated by the gateway node to the routing node in one cluster then allocated to the newly joined field node by the cluster head. The communication resources of a field node are used for intra-cluster communication in a superframe.

The process by which communication resources for field nodes are allocated is as follows:

The user configures the field node;

If by joining the superframe a fixed field node affects the routing node, the routes, superframes, and links of the routing nodes should be updated; and

The routing node saves the routing information, superframes, and local links, allocates resources for the field nodes based on the resource situation, then the routing node writes the superframe information and links to the field node.

The resource allocating processes to handheld and field nodes differ in that the communication resources of handheld nodes are in the CFP of a superframe.

Industrial measurements and control applications have many advantages, such as real-time communication, reliability, and low energy consumption. This invention is proposed with full consideration for these characteristics, as described in detail below.

1. This invention a uses a hybrid mesh and a star topology structure. The star structure simplifies the network structure, lowers the difficulties associated with maintenance and management, and improves the system's flexibility. The mesh structure improves the reliability of the network.

2. This invention uses and expands the superframe structure of the IEEE STD 802.15.4-2006 standard. It fully takes advantage of the IEEE STD 802.15.4-2006, improves the system's compatibility, and protects the existing investment. It simplifies the design and meets the demands of industrial applications.

3. This invention expands the long-period data procedure. It can process transmission of the data using a long data update rate in industrial processes, which simplifies and facilitates X.

4. This invention uses a hybrid mechanism comprising frequency division and time division. It expands the network capacity and increases the network reliability.

5. This invention uses a hybrid strategy comprising inter-cycle AFS and intra-cycle frequency hopping technology. It uses fixed channel during one cycle, which increases the network compatibility and it uses both an adaptive frequency switch and frequency hopping technology to improve the network reliability.

6. This invention uses a hybrid MAC method based on both competition and scheduling. It increases the flexibility by using the competition MAC, and it has good timeliness and consumes low quantities of energy by using the scheduling MAC.

7. This invention uses a two-stage resource allocation policy comprising a mix of global resource allocation and local resource allocation. The global resource allocation ensures optimal resource allocation, and local resource allocation alleviates the burden of global resource allocation, increases the efficiency of resource allocation, and improves the network flexibility and scalability.

8. This invention designs methods for routing a node that multi-hop joins a network, and methods for routing a node that is forwarding the joining request and joining response for field nodes and handheld nodes. The invention makes full use of the join mechanism supported by the IEEE STD 802.15.4-2006. It also expands the multi-hop method by which network nodes join based on the IEEE STD 802.15.4-2006, by removing the need for the node waiting to join the network to be located at the receiving scope of the gateway node. Therefore, it expands the network scale and realizes uniform management of the gateway node and network nodes.

BRIEF DESCRIPTION OF THE DRAWINGS

FIG. **1** is the physical topology structure diagram of an MSTN network according to this invention method;

FIG. **2** is an MSTN superframe structure diagram according to this invention method;

FIG. **3** is along period data processing schematic diagram according to this invention method;

FIG. **4A** is a diagram showing frequency division multiple access of the MSTN superframe according to this invention method;

FIG. **4B** is a diagram showing TDMA and frequency division multiple access of the MSTN superframe according to this invention method;

FIG. **4C** is a diagram showing the TDMA of the MSTN superframe according to this invention method;

FIG. **5** is a detailed diagram of the beacon frame payload according to this invention method;

FIG. **6** is a diagram of the beacon frame format based on the IEEE 802.15.4-2006 according to this invention method;

FIG. **7A** is a sample diagram showing the network topology in this invention method;

FIG. **7B** is the resource allocation results of FIG. **7A**;

FIG. **8** is the diagram of the process by which a node joins the network according to this invention method;

FIG. **9** is a diagram of the communication resource and route allocation processes for a routing node according to this invention method; and

FIG. **10** is a diagram of the communication resource allocation process for a field node according to this invention method;

DETAILED DESCRIPTION OF THE EMBODIMENTS

Detailed descriptions are provided below to supplement the accompanying drawings. It should be emphasized that the technologies involved in this invention are not only suitable for the following examples, but also for all appropriate systems and networks.

The method of WSN communication in MSTNs according to this invention includes the following steps:

Forming the nodes of a WSN into a mesh and star topology structure;

Based on the above topology structure, defining the superframe structure based on the IEEE STD 802.15.4-2006;

Based on the above topology structure and superframe structure, defining methods for long-period data processing, connectivity assessment, medium access control, channel measurement, frequency hopping, beacon frame formation, and two-stage resource allocation;

Based on the above topology structure, superframe structure, and methods, defining a network building method; and

Based on the above topology structure, superframe structure, and methods, defining the method for network establishment.

As shown in FIG. **1,** the technologies according to this invention are directed toward WSNs with hybrid mesh and star hybrid topology structures that include the following four categories of physical nodes.

1) Gateway Node

The gateway node is the converging center, and provides an interface for the MSTN network and other WSNs. The gateway node in this invention is a single node that acts as a measurement center and a control clearing center in the network. The gateway node can connect with a wired network, such as an Ethernet network. A gateway node has two function modules (a network manager and a security manager) that, respectively, realize the functions of network management and security management. The network manager manages the joining of a node, formation of a network, and the monitoring of the network performance. The security manager manages and certifies keys for routing nodes and field nodes.

2) Routing Node

A routing node is used to duplicate and forward data in an MSTN. A routing node can transmit or forward data to a gateway node, routing node, field node, and handheld node in a network. The routing node also supports all kinds of sensors.

3) Field Node

Field nodes are installed in industrial fields and connected with sensors and actuators. They are used for transmitting measurement and controlling information to complete a specific application.

4) Handheld Node

A handheld node is used for configuring and maintaining the MSTN network node. A handheld node can access the network casually. If handheld nodes are not included in the illustrations, the field node mentioned in this invention includes a handheld node.

FIG. **1** is a mesh and star hybrid hierarchical topology structure for MSTNs, which includes two levels. The first level comprises a mesh network, in which routing nodes and gateway nodes are deployed. A routing node communicates with at least one field node, gateway node, and one another routing node. The second level comprises a star network, in which routing nodes and field nodes are deployed. This level is also called a cluster. The field nodes communicate with only one routing node, but not with each other. In the star network, the routing node is the cluster head, and the field node is a cluster member.

Among the current wireless communication standards, the IEEE STD 802.15.4-2006 includes the features of low energy consumption, low cost, easy use, and high flexibility, which make it a good underlying communication protocol for WSNs. For this reason, the communication method of this invention is based on the IEEE STD 802.15.4-2006.

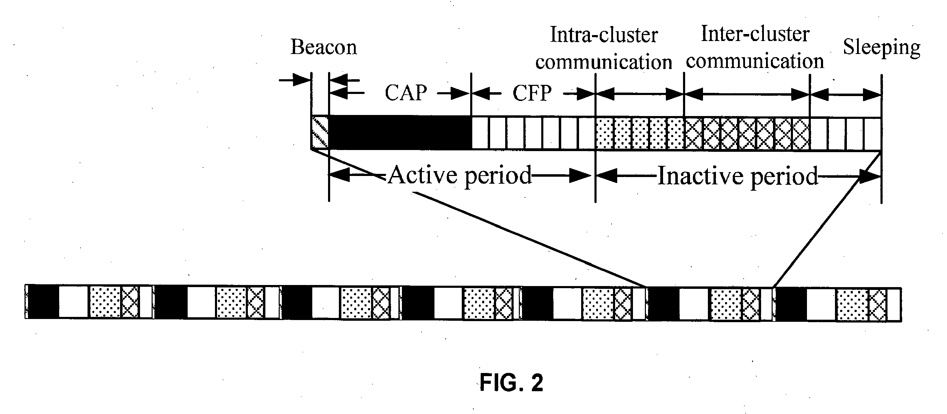

FIG. 2 shows that to be compatible with IEEE 802.15.4, this invention extends the superframe structure of the IEEE 802.15.4-2006. The extended superframe structure may be described as follows.

a) The beacon frame period is used for timeslot synchronization and superframe information publishing;

b) The CAP is used for node addition and intra-cluster management, which realizes medium access control by the timeslot CSMA/CA algorithm;

c) The CFP is used for emergency communications, which comprise communications among handheld nodes and cluster heads distributed by the routing nodes themselves. The CFP adopts TDMA to communicate during a CFP; and

d) The inactive period is used for intra-cluster communication, inter-cluster communication, and sleeping, which is uniformly allocated by the network manager. The intra-cluster communication period is an extension of the CFP and is used for intra-cluster communication; the inter-cluster communication period is used for inter-cluster communication and management. The intra-cluster communication period and the inter-cluster communication period use TDMA to communication.

Inter-cluster communication comprises communication between routing nodes and field nodes. Intra-cluster communication comprises communication among routing nodes and communication between routing nodes and gateway nodes.

Because the inactive period of the IEEE STD 802.15.4-2006 is used for inter-cluster communication, intra-cluster communication, and sleeping, the basic superframe length of this invention is 32 timeslots, and this invention's superframe length is $2^N$ times the basic superframe length (N is a positive integer). The length of a superframe composed of field nodes is decided by the data updating rate. The superframe length of the routing node is the minimum superframe length of all field nodes in the star network. The superframe length of the gateway node is decided by the minimum superframe length of its neighboring routing nodes.

In IEEE 802.15.4-2006, the maximum superframe length is limited. However, in many applications, the data update rate may exceed that of the IEEE STD 802.15.4-2006. In this invention, a long cycle for data in MSTN is defined as the data update rate of a node that either exceeds the maximum superframe length of the IEEE STD 802.15.4-2006 or exceeds the data update rate of a routing node in a cluster.

To process long-period data, the following parameters are needed:

AbsoluteSlotNumber: the absolute slot number in the beacon;

ActiveSlot: the timeslot number during which a superframe is active;

NumberSlots: the total number of timeslots in a superframe;

SuperframeMultiple: the least common multiple of the data update rate among all long-period data; and

LinkSuperframeNum: the ratio between the long-period data update cycle and the superframe length.

The range and the specific meaning of these parameters are shown in Table 2 and Table3.
Defining TransmitFlag to indicate the long-cycle data:

$$TransmitFlag = \left\lceil \frac{AbsoluteSlotNumber - ActiveSlot + 1}{NumberSlots} \right\rceil \% SuperframeMultiple$$

In each superframe cycle, field nodes receive the beacon frame and decide whether to send long-period data in this superframe cycle. The rules are as follows:

If 0 < *TransmitFlag* < *SuperframeMultiple* and *TransmitFlag* = *LinkSuperframeNum,* then the field node transmits data in this superframe cycle.

If *TransmitFlag*=0 and *LinkSuperframeNum* = *SuperframeMultiple*, then the field node transmits data in this superframe cycle.

Otherwise, the long-cycle data are not transmitted in the current superframe cycle.

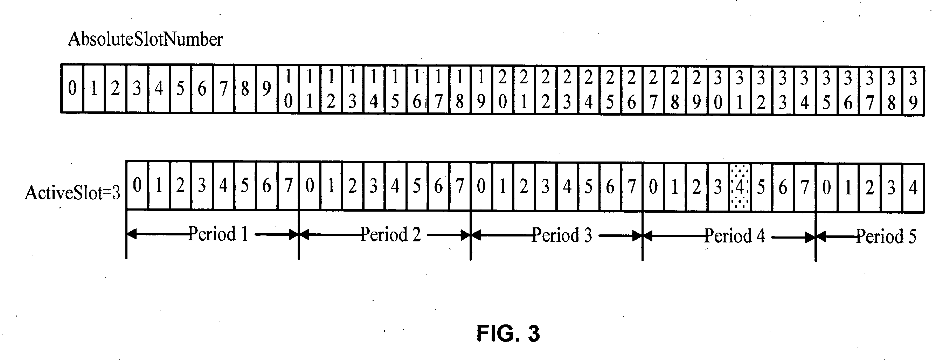

FIG. **3** shows an example of long-cycle data processing. Assume a timeslot for the data allocation, which is timeslot 4 in the fourth period. The absolute timeslot of the current Beacon is 27, and the SuperframeMultiple = 4. Therefore, we have:

ActiveSlot=3, NumberSlots = 8, AbsoluteslotNumber = 27, and LinkSuperframeNum = 4.

TransmitFlag is calculated as follows:

$$TransmitFlag = \left( \frac{27 - 3 + 1}{8} \right) \% 4 = 0$$

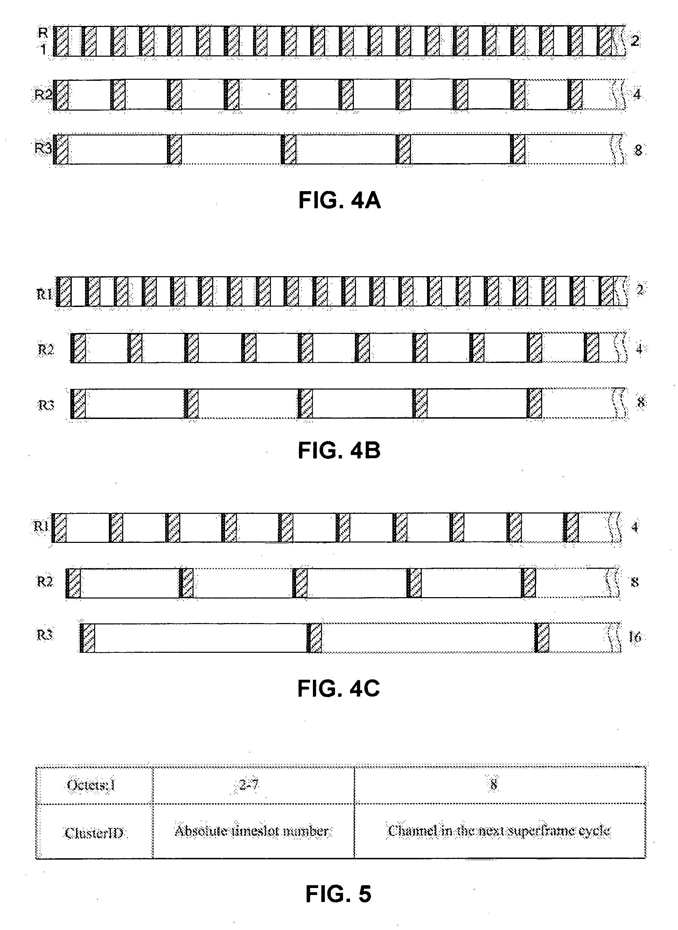

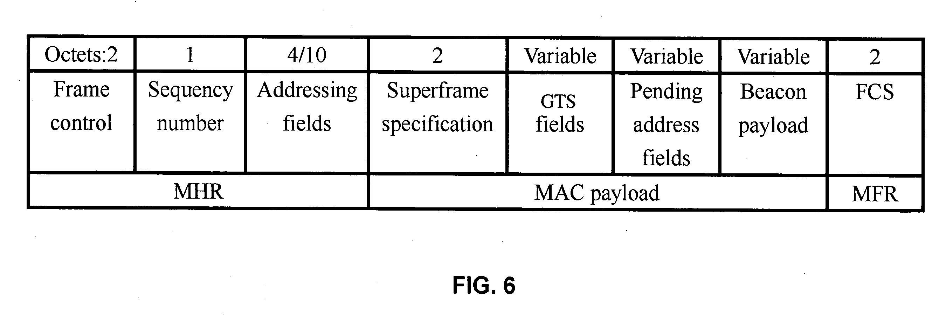

According to the calculation result, it can be concluded that TransmitFlag = 0 and SuperframeMultiple = LinkSuperframeNum. Therefore, a packet shall be transmitted during the current superframe cycle.
During the Beacon, CAP, and CFP periods, the same channel is used in a single superframe cycle. If the number of channels is not sufficient, the MSTN uses a TDMA mechanism. FIG. **4A,** FIG. **4B,** and FIG. **4C** show three superframes. FIG. **4A** shows the case in which only frequency-division but not time-division is used during the Beacon, CAP, and CFP periods of the beacon frame. FIG. **4B** shows the case in which frequency-division and time-division are used during the Beacon, CAP, and CFP periods of a beacon frame. FIG. **4C** shows the case in which time-division during is used during the Beacon, CAP, and CFP periods of the beacon frame. FIG. **4A** shows the superframe lengths of R1, R2, and R3, which are, respectively, two basic superframe lengths, four basic superframe lengths, and eight basic superframe lengths. The Beacon, CAP, and CFP periods of R1, R2, and R3 overlap, so the three routing nodes require three channels to complete communication during the Beacon, CAP, and CFP periods. FIG. **4B** shows the superframe lengths of R1, R2, and R3, respectively, are two basic superframe lengths, four basic superframe lengths, and eight basic superframe lengths. The Beacon, CAP, and CFP periods of R1 do not overlap with those of R2 and R3, so the three routing nodes require only two channels to complete communication during the Beacon, CAP, and CFP periods. FIG. **4C** shows the superframe lengths of R1, R2, and R3, which are, respectively, four basic superframe lengths, eight basic superframe lengths, and sixteen basic superframe lengths. The Beacon, CAP, and CFP periods of R1, R2, and R3 do not overlap, so the three routing nodes require only one channel to complete communication during the Beacon, CAP, and CFP periods.
This invention uses the beacon payload of the IEEE STD 802.15.4-2006 to distribute the extended superframe information. The beacon payload is shown in FIG. **5,** which includes the following subfields: Cluster ID, absolute timeslot number, channel used during the beacon period, and the active period in the next superframe cycle.
The format of the Beacon frame is shown in FIG. **6.** The MSTN utilizes the IEEE STD 802.15.4-2006 MAC beacon frames (see IEEE STD 802.15.4-2006 for details).

The beacon enabled mode in IEEE STD 802.15.4-2006 lacks scalability, which is only available in the star topology. In a star network that uses the beacon enabled mode, the coordinator periodically sends beacon frames to synchronize the neighboring nodes. As a result, network coverage is limited to the transmission range of the coordinator, which limits the number of nodes and the network scale. The MSTN requires a larger network scale. Therefore, the beacon enabled mode in the IEEE STD 802.15.4-2006 is not suitable for MSTN. To solve this problem, some changes must be made to send beacon frames in the following modes:

Gateway nodes and routing nodes send beacon frames, but do not forward beacon frames;

Gateway nodes send beacon frames for time synchronization and joining of neighbor routing nodes and for broadcasting the superframe information of gateway nodes; and

Routing nodes send beacon frames for time synchronization, joining of intra-cluster field nodes, and for broadcasting the superframe information of gateway nodes.

The MSTN supports frequency hopping, and the hopping sequence is designated by the network manager. As shown in Table 1, frequency hopping in the MSTN network includes three mechanisms: AFS, AFH, and TH.

Table 1 MAC mechanisms of the invention

| IEEE STD 802.15.4-2006 | WIA-PA | Basic MAC mechanism | | DLSL hopping mechanism |
|---|---|---|---|---|
| Beacon | Beacon | TDMA | | |
| CAP | CAP | CSMA | (FDMA+TDMA) | AFS |
| CFP | CFP | TDMA | | |
| Inactive | Intra-cluster period | TDMA | | AFH |
| | Inter-cluster period | TDMA | | TH |
| | Sleeping | - | | - |

I) Adaptive frequency switch (AFS): in the MSTN superframe, the beacon period, CAP, and CFP use the same channel in the same superframe cycle, and the channel is changed according to the channel conditions in different superframe cycles. When the channel conditions are bad, the communication channel is changed by the nodes. The channel conditions are evaluated by the packet loss rate and the retransmission time.

II) AFH: in the MSTN superframe, the timeslot of the intra-cluster communication stage changes the communication channel according to the channel conditions. When the channel conditions are bad, the node changes the communication channel conditions. The channel conditions are evaluated according to the packet loss ratio and the retransmission time. The intra-cluster communication period of an inactive period adopts this hopping mechanism. The structure of the frequency hopping sequence is: <timeslot 1, channel 1 ><timeslot 2, channel 2>... <timeslot i, channel i>.

III) TH: to avoid interference and fading, a user changes the communication channel in each timeslot according to a frequency hopping sequence that is predefined by the user. The user adopts a frequency hopping mechanism for intra-cluster communication during the inactive period. The structure of the frequency hopping sequence is: <timeslot 1, channel 1 ><timeslot 2, channel 2>... <timeslot i, channel i>.

For AFS and AFH, a user must measure the channel. The channel measurement is used to offer the channel conditions to the network manager and routing node, helping the network manager and routing node allocate communication channels. Afield node (or routing node) can measure one or more channel conditions and report the statistical information to the routing node (or network manager). A field node transmits measurement results collected from field nodes to routing nodes, and a routing node transmits the channel conditions collected from itself and from the field nodes to the network manager.

During the process of channel measurement, each node records all conditions of all channels used for communication with the node in the measurement period. The recorded performance information includes: the LQI, the packet loss rate, and the retransmission time. The packet loss rate is decided by the number of ACK signals and the number of transmission packets. For AFS, the beacon frame of the last superframe period forecasts the channel that will be used in the next superframe period. For AFH, the last timeslot forecasts the channel that will be used in the next timeslot. As stated, this invention uses TDMA and frequency division multiple access (FDMA). Therefore, allocation of communication resources is necessary. This invention is directed toward a hybrid MSTN, so it uses a two-stage resource allocation method that allocates the communication resources via two stages. The specific two-stage resource allocation method includes the following steps. The network manager in a gateway node allocates resources to the routing nodes in the mesh network. The referred resources include the resources used by the routing nodes for communication in the mesh network and the resources that the routing nodes can allocate to field nodes. Then, the routing nodes allocate resources for field nodes in the star network.

Communication resources consist of timeslots and channels. The following scheduling rules are employed for allocating resources:

First, allocating fixed channels;

First, allocating timeslots to nodes with the fastest update rate;

First, allocating resources to the packets with the earliest generating time; and

First, allocating resources to the highest priority packet prior to other packets.

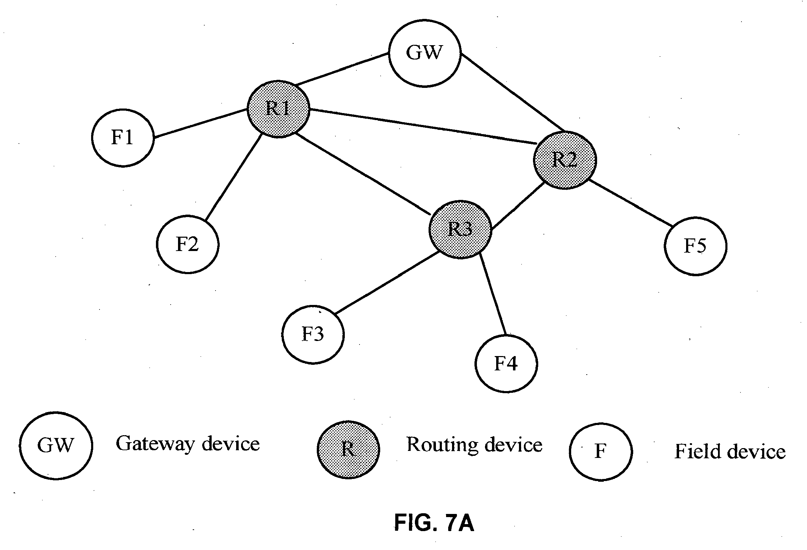

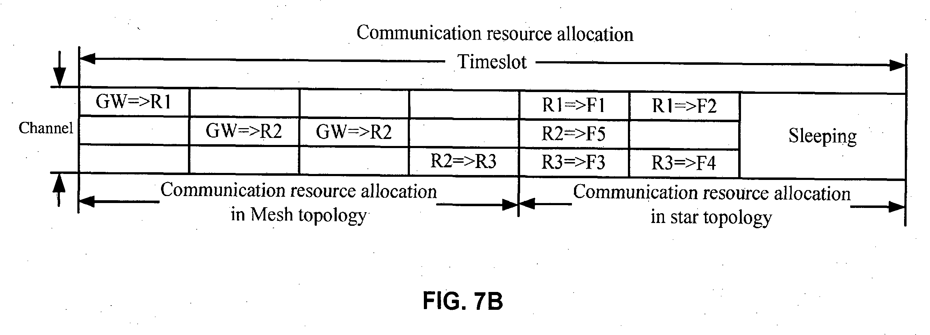

An example of resource allocation in the hybrid star and mesh topology structure is shown in FIGS. **7A** and **7B.** First, the network manager residing in the gateway node allocates communication resources to the routing nodes R1, R2, and R3. These communication resources are used for communication among R1, R2, and R3, for communication between the routing nodes and the gateway node, and for intra-cluster communication. Second, the routing nodes receive communication resources from the gateway nodes, choose and allocate resources for intra-cluster field nodes, which are used for intra-cluster communications among field nodes and their corresponding routing nodes. As shown in FIG. **7B,** after the gateway node allocates communication resources for R1, R2, and R3, R1 allocates communication resources for F1 and F2. R2 allocates communication resources for F5.R3 allocates communication resources for F3 and F4.

To communicate, nodes must store the allocated communication resources that refer to the information of the superframe attributes and link attributes, which declare the communication parameters among adjacent nodes in the network. Each node should maintain its own link information.

As shown in Table 2, each superframe attribute includes SuperframeID, SuperframeMultiple, NumberSlots, ActiveFlag, and ActiveSlot.

Table 2 Superframe attributes.

| Name | Valid range | Description |
|------|-------------|-------------|
| SuperframeID | 0 to 65 535 | The ID number of superframe, which is designed by the network manager. |
| SuperframeMultiple | 0 to 255 | SuperframeMultiple = maximum data update rates / minimum data update rates. It is used for processing the long-cycle data transmission. |
| NumberSlots | 0 to 65 535 | Superframe size (counts of timeslots) |
| ActiveFlag | 0 to 1 | Superframe active flag: <br> 0 = Inactive; <br> 1 = Active. |
| ActiveSlot | 0 to ($2^{48}$-1) | Absolute timeslot number (ASN) when a superframe begins activity |

As shown in Table 3, the link attributes includes LinkID, NeighborID, LinkType (unicast or broadcast), link feather (send, receive, shared send), slot type (data and management), relative slot number, ratio between the update cycle of the field nodes and the update cycle of the routing nodes in the network, link flag, the main channel number, and the superframe ID.

Table 3 Link attributes.

| Name | Valid range | Description |
|------|-------------|-------------|
| LinkID | 0 to 65 535 | The link ID number |
| NeighborID | 0 to 65 535 | Neighbor node ID |

(continued)

| Name | Valid range | Description |
|---|---|---|
| LinkType | 0 to 32 | Bit 7 represents the link type:<br>0 = Unicast;<br>1 = Broadcast;<br>Bits5 and bit 6 represent the character of a link:<br>00 = Transmitting;<br>01 = Transmit-shared;<br>10 = Receiving;<br>Bits 3 and 4 represent the type of a timeslot:<br>0 = Special data timeslot;<br>1 = Data timeslot shared.<br>2= Special manage timeslot<br>3= Manage timeslot shared<br>Bit 2 represents the aggregation character:<br>0 = Non-aggregation timeslot;<br>1 = Aggregation timeslot. |
| RelativeSlotNumber | 0 to 65 535 | Relative timeslot number |
| LinkSuperframeNum | 0 to 255 | LinkSuperframeNum = data update rate of this node/ the minimum data update rate. It is used for processing the long-cycle data transmission. |
| ActiveFlag | 0 to 1 | Indicating that if a link is being used:<br>0 = Not used;<br>1 = Being used. |
| Channel Index | 0 to 255 | The channel sequence numbers for this link, namely, the sequence numbers of the main channels. |
| SuperframeID | 0 to 65 535 | Reference to a superframe in the superframe table. |

The following describes how to establish a network.

Before joining an MSTN, a routing node or a field node evaluate the connectivity and choose one or more parent nodes.

The indices for the connectivity evaluation include: RSSI, ED, and LQI.

To evaluate the connectivity, a routing node or field node listens to packets from neighboring nodes (or gateway nodes) before joining to the network to identify the routing nodes (or gateway nodes) within the communication range. The exact process is: a new routing node or field node waits for a message from the routing nodes (or gateway nodes) in a certain channel, collects the connection information, and continues to collect the connection information from other routing nodes (or gateway nodes). According to the connectivity evaluation of multiple routing nodes (or gateway nodes), the new node then choose a best one, which is not limited to the routing nodes (or gateway nodes) in a specific band.

The joining request and joining response of field nodes or handheld nodes must be forwarded by the routing nodes already present in the network. If the routing node cannot reach the gateway node in one hop, it also requires other routing nodes to forward the joining request and joining response. The nodes used to forward the joining request and joining response by one hop are called proxy routing nodes.

The content of a joining request includes the physical address and the node type (routing node, field node, or handheld node).The content of a join response includes the join state, the physical address of the new node, and the short address of the new node. The join state is used to indicate the result (success or failure) of the node applying to join the network. The short address of the new node is a 16-bit address distributed by the gateway node after the node successfully joins.

When a routing node joins a network, the joining process is divided into two kinds (one-hop joining and multi-hop joining) based on the number of hops between the routing nodes and the gateway node. If the new routing node sends a joining request to the gateway node by one hop, the one-hop joining process is used. If the new routing node joins the network by using another existing routing node, the multi-hop joining process is used. The joining processes of field nodes and handheld nodes are similar to those used for the routing nodes.

The joining primitives in an IEEE 802.15.4-2006 MAC layer are applied using the one-hop joining process for a routing node in the MSTN, which is not described in this invention.

The following describes how a node (routing node, field node, or handheld node) joins the network.

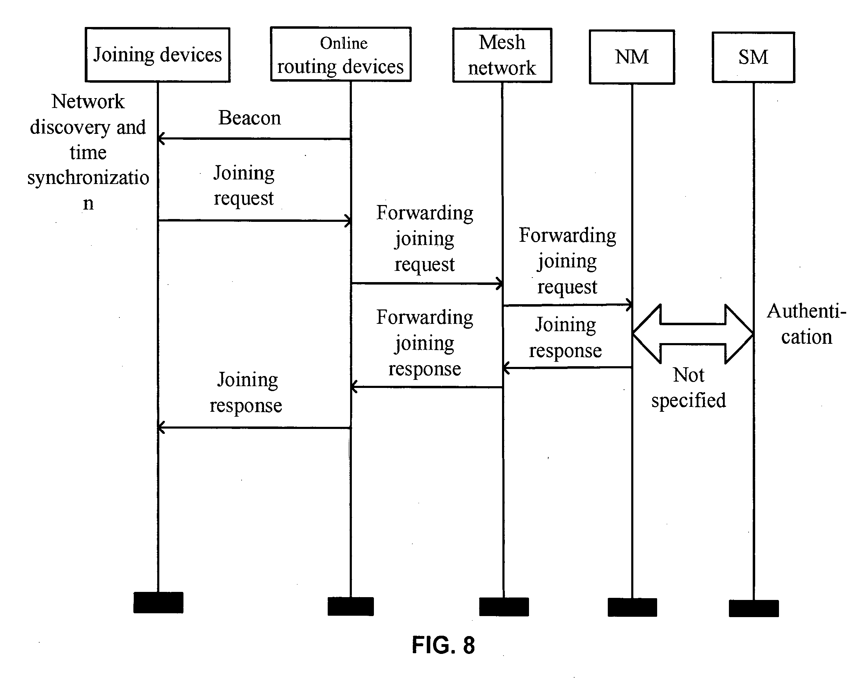

Before joining the network, a node shall be provided a join key by a handheld node or manufacturer. As shown in FIG. **8,** the joining process of a node includes the following steps:

A) Network Discovery: the node waiting to join the network continues to scan available channels in the network until it successfully receives beacons from joined routing nodes or gateway nodes;

B) Time Synchronization: the node waiting to join the network chooses the beacon emitting node as the proxy routing node and uses the time information in the beacon to complete time synchronization;

C) Send a joining request: the node waiting to join the network sends a request to the proxy routing node, and the proxy routing node forwards this request to the gateway node;

D) Return a joining response: after the gateway node receives the joining response and finishes the security authentication, the joining response is returned;

E) Processing the response: the node waiting to join the network receives the joining response forwarded by the proxy routing node. If the response is negative, the node waiting to join the network shall restart this joining process; otherwise, the joining process shall be finished; and

F) Broadcast beacon: if the node waiting to join the network has joined the network successfully and acted as a routing node, it shall broadcast beacons.

After a node joins the network, the gateway node should allocate communication resources for it. Since a two-stage resource allocation method is applied in the example, the process of resource allocation for routing nodes, field nodes, and handheld nodes are different, which is described below separately.

If a new routing node joins the network by one hop, the gateway node directly allocates communication resources comprising a superframe, link, and route by using related commands; otherwise, if a new routing node joins the network by multiple hops, these command frames must be forwarded by online routing nodes.

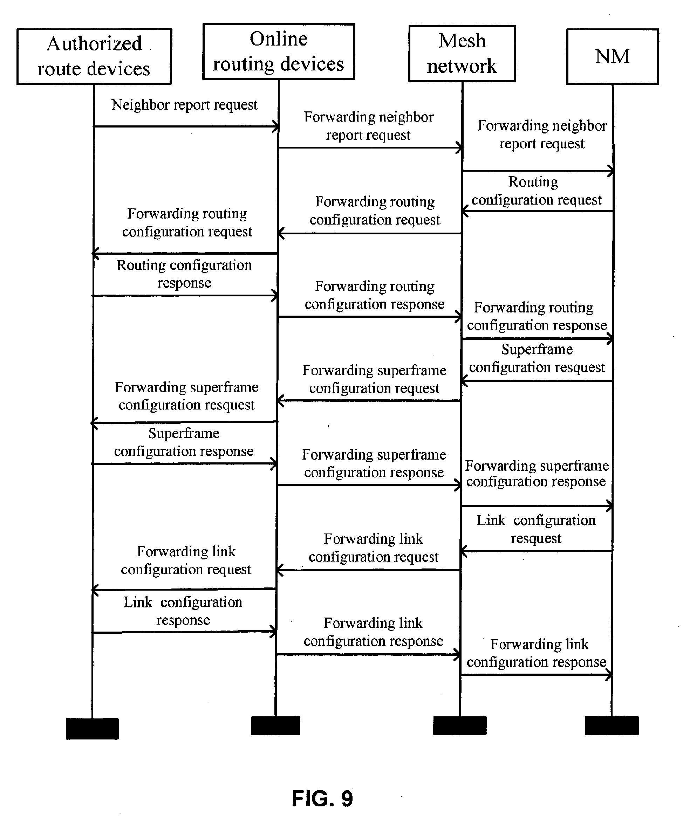

FIG. 9 indicates the process of communication resource allocation for a routing node.

After a routing node joins the network, it reports its neighbors' information to the gateway node. The gateway node configures the routing table for the new routing node based on the reported neighbors' information. The gateway node configures the superframe table for the new routing node based on the reported neighbors' information. Finally, the gateway node configures the link table for the new routing node based on the reported neighbors' information.

If a field node has just joined the network, its communication resources are first pre-allocated by the gateway node to the routing node (the cluster head) in the cluster, then allocated to the newly joined field node by the cluster head. The communication resources of a field node are used for intra-cluster communication in a superframe.

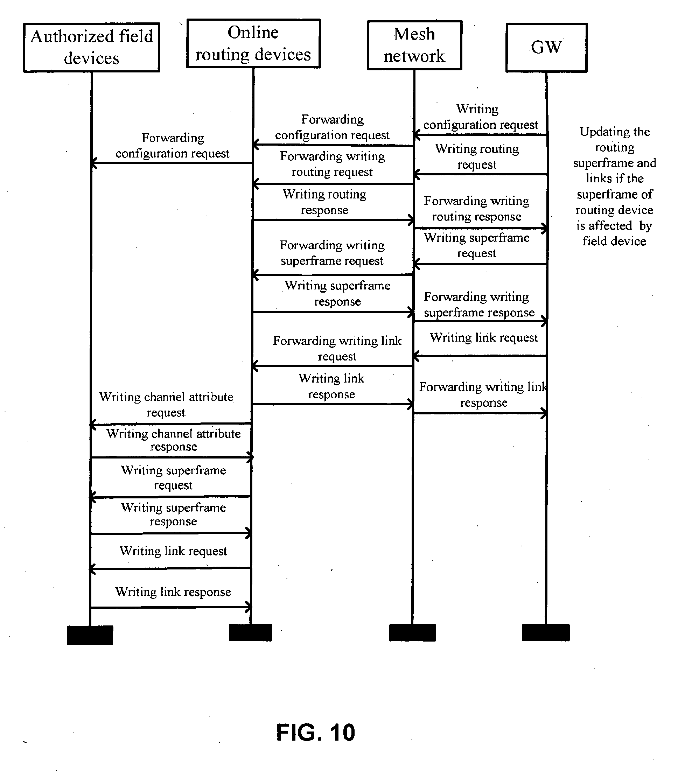

FIG. **10** indicates the process by which communication resources are allocated to field nodes.

The user configures the field node;

If by joining the fixed field node affects the superframe of the routing node, the routes, superframes, and links of the routing node should be updated; and

The routing node saves the information of the routes, superframes, and local links and allocates resources for the field nodes based on the conditions of its resources. The routing node writes the information of the superframe and links to the field nodes.

The process of allocating communication resources to handheld nodes is similar, except that the communication resources for handheld nodes are allocated during the CFP period of a superframe.

## Claims

1. A method for wireless sensor network communication in a mesh and star topology network, MSTN, comprising routing nodes, gateway nodes, handheld nodes and field nodes, the method comprises defining a superframe structure based on IEEE STD 802.15.4-2006 and transmitting communication resources within said MSTN via said superframe structure;
   **characterized in that**

   (a) said superframe structure is an extended superframe structure comprising a beacon frame period, a contention access period, CAP, a contention-free access period, CFP, an intra-cluster communication period, an inter-cluster communication period, and a sleeping period; wherein the beacon frame period is used for timeslot synchronization and superframe information publishing; the CAP is used for node addition and intra-cluster management, and for medium access control via a timeslot carrier sense multiple access with collision avoidance, CSMA/CA, algorithm; the CFP is used for emergency communications among the handheld nodes and the routing nodes via a time division multiple access, TDMA, approach; the intra-cluster communication period is used for intra-cluster communication via the TDMA approach and a timeslot frequency hopping; and the inter-cluster communication period is used for inter-cluster communication and management via the TDMA approach and the timeslot frequency hopping; and wherein said communication resources are in the form of <channel, timeslot>;

(b) said extended superframe is maintained by each node, and the length of the extended superframe in each period is defined by itself; the length of the extended superframe is $2^N$ times the basic length of a superframe wherein N is a positive integer; the basic length of the superframe is 32 timeslots; the extended superframe length in a routing node is the minimum superframe length of the field nodes in the star network and the extended superframe length in the gateway node is the minimum superframe length of the routing nodes in the MSTN; and

(c) said beacon frames, used to publish the extended superframe information, are sent in the following modes:

(i) the gateway node and the routing nodes send beacon frames and do not forward beacon frames;
(ii) the gateway node sends beacon frames for time synchronization for joining of neighbor routing nodes and for broadcasting the extended superframe information of the gateway node; and
(iii) the routing nodes send beacon frames for time synchronization to facilitate joining of intra-cluster field nodes and to broadcast the extended superframe information of the routing nodes.

## Patentansprüche

1. Verfahren für eine drahtlose Sensornetzkommunikation in einem Maschen- und Sterntopologienetz ,MSTN, umfassend Routing-Knoten, Gateway-Knoten, tragbare Knoten und Feldknoten, wobei das Verfahren das Definieren einer Superframe-Struktur basierend auf dem Standard IEEE 802.15.4-2006 und das Übertragen von Kommunikationsressourcen innerhalb des MSTN über die Superframe-Struktur umfasst;
**dadurch gekennzeichnet, dass**

(a) die Superframe-Struktur eine erweiterte Superframe-Struktur ist, umfassend eine Beacon-Frame-Phase, eine Contention-Access-Phase, CAP, eine Contention-Free-Access-Phase, CFP, eine Intracluster-Kommunikationsphase, eine Intercluster-Kommunikationsphase und eine Schlafphase; wobei die Beacon-Frame-Phase für die Zeitschlitzsynchronisation und Superframe-Informationsveröffentlichung verwendet wird, die CAP für die Knotenhinzufügung und Intracluster-Verwaltung und zur Medienzugriffskontrolle über einen Zeitschlitz Algorithmus für Mehrfachzugriff mit Trägerprüfung und Kollisionsvermeidung, CSMA/CA, verwendet wird; die CFP für Notfallkommunikationen unter tragbaren Knoten und den Routing-Knoten über einen Zeitmultiplexverfahrens-Ansatz, TDMA, verwendet wird; die Intracluster-Kommunikationsphase für Intracluster-Kommunikation über den TDMA-Ansatz und einen Zeitschlitz Frequenz-Hopping verwendet wird; und die Intercluster-Kommunikationsphase für Intercluster-Kommunikation und -Verwaltung über den TDMA-Ansatz und den Zeitschlitz Frequenz-Hopping verwendet wird; und wobei die Kommunikationsressourcen die Form von <Kanal, Zeitschlitz> aufweisen;

(b) der erweiterte Superframe von jedem Knoten aufrechterhalten wird, und die Länge von dem erweiterten Superframe in jeder Phase von ihm selbst definiert wird; wobei die Länge des erweiterten Superframes $2^N$ Mal die Grundlänge von einem Superframe beträgt, wobei N eine positive ganze Zahl ist; wobei die Grundlänge des Superframes 32 Zeitschlitze beträgt; wobei die erweiterte Superframe-Länge in einem Routing-Knoten die Mindest-Superframe-Länge von den Feldknoten im Sternnetz ist und die erweiterte Superframe-Länge im Gateway-Knoten die Mindest-Superframe-Länge von den Routing-Knoten im MSTN ist; und

(c) die Beacon-Frames, die zum Veröffentlichen der erweiterten Superframe-Informationen verwendet werden, in den folgenden Modi gesendet werden:

(i) der Gateway-Knoten und die Routing-Knoten senden Beacon-Frames und leiten keine Beacon-Frames weiter;
(ii) der Gateway-Knoten sendet Beacon-Frames für die Zeitsynchronisation zum Verbinden von benachbarten Routing-Knoten und zum Senden der erweiterten Superframe-Informationen des Gateway-Knotens; und

(iii) die Routing-Knoten senden Beacon-Frames für die Zeitsynchronisation, um das Verbinden von Intracluster-Feldknoten zu ermöglichen und um die erweiterten Superframe-Informationen der Routing-Knoten zu senden.

**Revendications**

1. Procédé pour la communication d'un réseau de détecteurs sans fil dans un réseau à la topologie maille et étoile, MSTN, comprenant des noeuds de routage, des noeuds de passerelle, des noeuds portatifs et des noeuds de champ, le procédé comprenant la définition d'une structure de supertrame fondée sur la norme IEEE STD 802.15.4-2006 et la transmission de ressources de communication au sein dudit MSTN par l'intermédiaire de ladite structure de supertrame ;
**caractérisé en ce que**

(a) ladite structure de supertrame est une structure de supertrame étendue comprenant une période de trame de balise, une période d'accès de contention, CAP, une période d'accès sans contention, CFP, une période de communication intra-grappe, une période de communication inter-grappes, et une période de veille ; dans lequel la période de trame de balise est utilisée pour la synchronisation de créneau temporel et la publication d'informations de supertrame ; la période d'accès de contention est utilisée pour l'addition de noeud et la gestion intra-grappe, et pour le contrôle d'accès de support par l'intermédiaire d'un algorithme d'accès multiple de détection de support de créneau temporel avec évitement de collision, CSMA/CA ; la période d'accès sans contention est utilisée pour les communications d'urgence parmi les noeuds portatifs et les noeuds de routage par l'intermédiaire d'une méthode à accès multiple à division de temps, TDMA ; la période de communication intra-grappe est utilisée pour la communication intra-grappe par l'intermédiaire de la méthode TDMA et d'un saut de fréquence de créneau temporel ; et la période de communication inter-grappes est utilisée pour la communication inter-grappes et la gestion par l'intermédiaire de la méthode TDMA et du saut de fréquence de créneau temporel ; et dans lequel lesdites ressources de communication sont sous la forme de <canal, créneau temporel> ;

(b) ladite supertrame étendue est maintenue par chaque noeud, et la longueur de la supertrame étendue dans chaque période est définie par elle-même ; la longueur de la supertrame étendue est $2^N$ fois la longueur de base d'une supertrame, N étant un nombre entier positif ; la longueur de base de la supertrame vaut 32 créneaux temporels ; la longueur de supertrame étendue dans un noeud de routage est la longueur minimale de supertrame des noeuds de champ dans le réseau en étoile et la longueur de supertrame étendue dans le noeud de passerelle est la longueur minimale de supertrame des noeuds de routage dans le MSTN ; et

(c) lesdites trames de balise, utilisées pour publier les informations de supertrame étendue, sont envoyées dans les modes suivantes :

(i) le noeud de passerelle et les noeuds de routage envoient des trames de balise et ne transfèrent pas les trames de balise ;
(ii) le noeud de passerelle envoie des trames de balise pour la synchronisation de temps pour le raccordement des noeuds de routage voisins et pour la diffusion des informations de supertrame étendue du noeud de passerelle ; et
(iii) les noeuds de routage envoient des trames de balise pour la synchronisation de temps pour faciliter le raccordement de noeuds de champ intra-grappe et pour diffuser les informations de supertrame étendue des noeuds de routage.

**FIG. 1**

FIG. 2

AbsoluteSlotNumber

| 0 | 1 | 2 | 3 | 4 | 5 | 6 | 7 | 8 | 9 | 1 0 | 1 1 | 1 2 | 1 3 | 1 4 | 1 5 | 1 6 | 1 7 | 1 8 | 1 9 | 2 0 | 2 1 | 2 2 | 2 3 | 2 4 | 2 5 | 2 6 | 2 7 | 2 8 | 2 9 | 3 0 | 3 1 | 3 2 | 3 3 | 3 4 | 3 5 | 3 6 | 3 7 | 3 8 | 3 9 |
|---|---|---|---|---|---|---|---|---|---|---|---|---|---|---|---|---|---|---|---|---|---|---|---|---|---|---|---|---|---|---|---|---|---|---|---|---|---|---|---|

ActiveSlot=3

| 0 | 1 | 2 | 3 | 4 | 5 | 6 | 7 | 0 | 1 | 2 | 3 | 4 | 5 | 6 | 7 | 0 | 1 | 2 | 3 | 4 | 5 | 6 | 7 | 0 | 1 | 2 | 3 | 4 | 5 | 6 | 7 | 0 | 1 | 2 | 3 | 4 |
|---|---|---|---|---|---|---|---|---|---|---|---|---|---|---|---|---|---|---|---|---|---|---|---|---|---|---|---|---|---|---|---|---|---|---|---|---|

←———— Period 1 ————→←———— Period 2 ————→←———— Period 3 ————→←———— Period 4 ————→←— Period 5

**FIG. 3**

EP 2 381 737 B1

**FIG. 4A**

**FIG. 4B**

**FIG. 4C**

| Octets:1 | 2-7 | 8 |
|---|---|---|
| ClusterID | Absolute timeslot number | Channel in the next superframe cycle |

**FIG. 5**

| Octets:2 | 1 | 4/10 | 2 | Variable | Variable | Variable | 2 |
|---|---|---|---|---|---|---|---|
| Frame control | Sequency number | Addressing fields | Superframe specification | GTS fields | Pending address fields | Beacon payload | FCS |
| MHR | | | MAC payload | | | | MFR |

**FIG. 6**

EP 2 381 737 B1

GW

F1  R1

F2  R2

R3  F5

F3  F4

GW  Gateway device    R  Routing device    F  Field device

**FIG. 7A**

EP 2 381 737 B1

Communication resource allocation

| Channel | | | | | | |
|---|---|---|---|---|---|---|
| GW=>R1 | | | | R1=>F1 | R1=>F2 | |
| | GW=>R2 | GW=>R2 | | R2=>F5 | | Sleeping |
| | | | R2=>R3 | R3=>F3 | R3=>F4 | |

Timeslot

Communication resource allocation
in Mesh topology

Communication resource allocation
in star topology

**FIG. 7B**

EP 2 381 737 B1

FIG. 8

EP 2 381 737 B1

| Authorized route devices | Online routing devices | Mesh network | NM |
|---|---|---|---|

Neighbor report request

Forwarding neighbor report request

Forwarding neighbor report request

Routing configuration request

Forwarding routing configuration request

Forwarding routing configuration request

Routing configuration response

Forwarding routing configuration response

Forwarding routing configuration response

Superframe configuration resquest

Forwarding superframe configuration request

Forwarding superframe configuration resquest

Superframe configuration response

Forwarding superframe configuration response

Forwarding superframe configuration response

Link configuration resquest

Forwarding link configuration request

Forwarding link configuration request

Link configuration response

Forwarding link configuration response

Forwarding link configuration response

**FIG. 9**

**FIG. 10**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006049415 A

**Non-patent literature cited in the description**

- *IEEE 802.15.4,* 2006
- *IEEE STD 802.15.4,* 2006